# EUROPEAN PATENT APPLICATION

(11) **EP 4 366 353 A1**
(43) Date of publication of application: **08.05.2024**
(21) Application number: 21950567.4
(22) Date of filing: 23.07.2021
(51) Int. Cl.: H04W 12/06

(54) **ADDRESS VERIFICATION METHOD AND CORRESPONDING DEVICE**

(71) Applicant: Huawei Technologies Co., Ltd., Shenzhen, Guangdong 518129 (CN)
(72) Inventor: WANG, Yong, Shenzhen, Guangdong 518129 (CN); CHEN, Jing, Shenzhen, Guangdong 518129 (CN)
(74) Representative: Gill Jennings & Every LLP
(86) International application number: PCT/CN2021/108201
(87) International publication number: WO 2023/000318

(57) **Abstract**

Embodiments of this application provide an address verification method and a corresponding apparatus, are applied to the field of communication technologies, and in particular, relate to a short-range communication technology. During specific application, a second node receives first information from a first node. The first information includes a first to-be-resolved address and a first resolving key index that are of the first node. The first resolving key index indicates a first resolving key. Then, the second node can determine an identity address of the first node based on the first resolving key index and the first to-be-resolved address. The identity address uniquely identifies the first node. The first to-be-resolved address includes verification information for verifying the first resolving key. The first resolving key corresponds to a first identity address. In this manner, secure communication between communication nodes can be ensured, and communication efficiency and performance can be ensured.

## Description

### TECHNICAL FIELD

Embodiments of this application relate to the field of communication technologies, and in particular, to a short-range communication technology. Specifically, this application provides an address verification method and a corresponding apparatus.

### BACKGROUND

Currently, with rapid development of informatization, mobile terminals, including mobile phones, tablet computers, and other portable smart terminals, are indispensable personal smart tools in life. Compared with conventional computers, especially desktop workstations and servers, these tools are more convenient to use. However, when enjoying convenience of communication, people also face a risk of privacy leakage. When two communication nodes perform wireless communication, how to perform identity authentication to ensure communication efficiency and performance is a technical problem to be urgently resolved, to reduce the risk of privacy leakage.

### SUMMARY

Embodiments of this application disclose an address verification method and a corresponding apparatus, to implement secure communication between communication nodes, reduce a risk of privacy leakage, and ensure communication efficiency and performance.

According to a first aspect, an address verification method is provided. The method may be performed by a communication node or a chip configured in a communication node. For example, the method may be performed by a second node or a chip configured in the second node. The method includes: receiving first information from a first node, where the first information includes a first to-be-resolved address and a first resolving key index that are of the first node, and the first resolving key index indicates a first resolving key; and determining an identity address of the first node based on the first resolving key index and the first to-be-resolved address, where the identity address uniquely identifies the first node; and the first to-be-resolved address includes verification information for verifying the first resolving key, and the first resolving key corresponds to a first identity address.

In this solution, security of data transmission between communication nodes can be ensured by using a to-be-resolved address. The to-be-resolved address can be correctly resolved only by a communication node that has a same resolving key. Therefore, according to the address verification method provided in this application, it can be ensured that the identity address of the first node is difficult to obtain, and security of data transmission between the communication nodes can be ensured.

With reference to the first aspect, in some implementations of the first aspect, the determining an identity address of the first node based on the first resolving key index and the first to-be-resolved address includes: determining the first resolving key based on the first resolving key index, and determining the identity address of the first node based on the first resolving key and the first to-be-resolved address.

In this solution, the second node can determine, based on the first resolving key index, the first resolving key corresponding to the second node, and then determine the identity address of the first node based on the first resolving key and the first to-be-resolved address, without determining the identity address of the first node by traversing all locally stored peer node resolving keys, or by only needing to determine the identity address of the first node by traversing a peer node resolving key corresponding to the first resolving key index. Therefore, computation duration required for address verification can be reduced, and communication efficiency and performance can be ensured.

With reference to the first aspect, in some implementations of the first aspect, the determining an identity address of the first node based on the first resolving key index and the first to-be-resolved address includes: determining that local verification information obtained based on the first resolving key is the same as the verification information included in the first to-be-resolved address, and determining that the first identity address is the identity address of the first node.

In this solution, whether the first identity address corresponding to the first resolving key is the identity address of the first node is determined based on a comparison result between the local verification information and the verification information included in the received first to-be-resolved address. This ensures address trustworthiness verification of the first node, thereby ensuring security of data transmission between the communication nodes.

With reference to the first aspect, in some implementations of the first aspect, the first to-be-resolved address includes a random number, and the determining an identity address of the first node based on the first resolving key index and the first to-be-resolved address includes: determining that local verification information obtained based on the first resolving key and the random number is the same as the verification information included in the first to-be-resolved address, and determining that the first identity address is the identity address of the first node.

In this solution, the local verification information is determined based on the random number included in the first to-be-resolved address and the first resolving key. This can ensure that the identity address of the first node is difficult to obtain, thereby ensuring security of data transmission between the communication nodes.

For example, the local verification information is obtained based on a hash operation performed on the first resolving key and the random number. The hash operation is irreversible. Therefore, it can be further ensured, through the hash operation, that only a trusted communication node can resolve the received to-be-resolved address, thereby ensuring security of data transmission between the communication nodes.

With reference to the first aspect, in some implementations of the first aspect, a predefined or preconfigured correspondence exists between the first resolving key, the first resolving key index, and the first identity address.

The first resolving key corresponding to the first resolving key index can be determined based on the correspondence, and the received first to-be-resolved address can be resolved by using the first resolving key. In this way, whether the identity address of the first node is the first identity address corresponding to the first resolving key index or the first resolving key is determined. According to this solution, the first resolving key or the first identity address is determined based on the predefined or preconfigured relationship. The second node is prevented, each time the second node verifies address trustworthiness of the first node, from receiving the resolving key index, resolving key information, and identity address information that are sent by the first node. Duration required for a connection between the communication nodes is reduced, and communication efficiency and performance are ensured.

With reference to the first aspect, in some implementations of the first aspect, before the receiving first information from a first node, the method further includes: receiving second information from the first node, where the second information includes the first resolving key and the first identity address; and defining or configuring the correspondence between the first resolving key, the first resolving key index, and the first identity address.

For example, the second information further includes the first resolving key index. The second node may define or configure the correspondence based on the first resolving key, the first resolving key index, and the first identity address that are included in the received second information. In this solution, the first resolving key index, the first resolving key, and the first identity address are all from the first node, and implementation is simple.

For example, the first resolving key index is from a control node. The control node is configured to configure a resolving key index (namely, the first resolving key index) of the first node and a resolving key index (namely, a second resolving key index) of the second node. The control node may be, for example, a main node or an access point, and the control node may alternatively be, for example, the first node or the second node. The second node may define or configure the correspondence based on the received second information and the first resolving key index from the control node. In this solution, resolving key indexes corresponding to different communication nodes are all from a same communication node. This facilitates unified management of the resolving key indexes, and can avoid a collision, on a local node, of a resolving key index of a peer node, thereby reducing duration required for address trustworthiness verification of the peer node, and ensuring communication efficiency and performance.

For example, with reference to the first aspect, in some implementations of the first aspect, the method further includes: sending the first resolving key index to the first node. The second node may define or configure the correspondence based on the second information and the locally generated first resolving key index. In this solution, the resolving key index (namely, the first resolving key index) of the first node is from the second node. This can avoid a collision, on the second node, of the resolving key index of the first node side, that is, on the second node, avoid that a same resolving key index corresponding to different peer nodes, thereby reducing the duration required for address trustworthiness verification of the peer node, and ensuring communication efficiency and performance.

With reference to the first aspect, in some implementations of the first aspect, before the receiving first information from a first node, the method further includes: receiving third information from the first node, where the third information indicates to determine the identity address of the first node based on a resolving key index and a to-be-resolved address.

For example, the resolving key information includes a resolving key and the resolving key index, or the resolving key information includes a resolving key.

For example, the identity address information includes a public device address and/or a static device address.

According to this solution, in one aspect, the second node can be enabled to determine the identity address of the first node by using the resolving key information, to ensure security of data transmission between the communication nodes. In another aspect, flexibility of determining the identity address of the first node by the second node can be improved, the computation duration required for address trustworthiness verification can be reduced, and communication efficiency and performance can be ensured.

For example, the third information is included in pairing request information from the first node. For example, the pairing request information includes security information distribution information, and the security information distribution information indicates whether to send the resolving key information and/or the identity address information. In this solution, the third information is implemented by using the pairing request information, so that signaling overheads can be reduced, and implementation is simple.

With reference to the first aspect, in some implementations of the first aspect, the method further includes: sending fourth information to the first node, where the fourth information indicates whether to determine an identity address of the second node based on the resolving key index and the to-be-resolved address. According to this solution, in one aspect, the first node can be enabled to determine an identity address of the peer node by using the resolving key information, to ensure security of data transmission between the communication nodes. In another aspect, flexibility of determining an identity address of the peer node can be improved, computation duration required for verification of the identity address can be reduced, and communication efficiency and performance can be ensured.

For example, the fourth information is included in pairing response information sent to the first node. For example, the pairing response information includes the security information distribution information, and the security information distribution information indicates whether to send the resolving key information and/or the identity address information. In this solution, the fourth information is implemented by using the pairing response information, so that signaling overheads can be reduced, and implementation is simple.

According to a second aspect, an address verification method is provided. The method may be performed by a communication node or a chip configured in a communication node. For example, the method may be performed by a first node or a chip configured in the first node. The method includes: determining a first to-be-resolved address of the first node; and sending first information to a second node, where the first information includes the first to-be-resolved address and a first resolving key index, the first resolving key index indicates a first resolving key; and the first to-be-resolved address includes verification information for verifying the first resolving key, the first resolving key corresponds to an identity address of the first node, and the identity address uniquely identifies the first node.

In this solution, data transmission between communication nodes can be implemented by using a to-be-resolved address. The to-be-resolved address can be correctly resolved only by a communication node that has a same resolving key. Therefore, according to the address verification method provided in this application, it can be ensured that the identity address of the first node is difficult to obtain, and security of data transmission between the communication nodes can be ensured.

With reference to the second aspect, in some implementations of the second aspect, the determining a first to-be-resolved address of the first node includes: determining the verification information of the first resolving key based on the first resolving key and the identity address of the first node.

For example, the first node performs a cryptographic operation on the first resolving key and the identity address of the first node, to obtain a cryptographic operation output value. The cryptographic operation output value is the verification information or a part of the verification information.

In this solution, the verification information is determined based on the first resolving key and the identity address of the first node. This can ensure that the first to-be-resolved address can be correctly resolved only by a communication node that has a same resolving key, thereby ensuring security of data transmission between the communication nodes.

With reference to the second aspect, in some implementations of the second aspect, the first to-be-resolved address includes a random number, and the determining a first to-be-resolved address of the first node includes: determining the verification information obtained based on the first resolving key and the random number.

In this solution, the verification information in the first to-be-resolved address is determined based on the random number included in the first to-be-resolved address. This can ensure that the identity address of the first node is difficult to obtain, thereby ensuring security of data transmission between the communication nodes.

For example, the verification information is obtained based on a hash operation performed on the first resolving key and the random number. The hash operation is irreversible. Therefore, it can be further ensured, through the hash operation, that only a trusted communication node can resolve the received to-be-resolved address, thereby ensuring security of data transmission between the communication nodes.

With reference to the second aspect, in some implementations of the second aspect, before the sending first information to a second node, the method further includes: send second information to the second node, where the second information includes the first resolving key and the identity address.

For example, the second information further includes the first resolving key index. In this solution, a correspondence between the first resolving key index, the first resolving key, and the identity address can be configured or defined. The second node is prevented, each time the second node verifies address trustworthiness of the first node, from receiving the resolving key index, resolving key information, and identity address information that are sent by the first node. Duration required for a connection between the communication nodes is reduced, and communication efficiency and performance are ensured. In addition, in this solution, the first resolving key index, the first resolving key, and a first identity address are all from the first node, and implementation is simple.

For example, the first resolving key index is from a control node. The control node is configured to configure a resolving key index (namely, the first resolving key index) of the first node and a resolving key index (namely, a second resolving key index) of the second node. The control node may be, for example, a main node or an access point, and the control node may alternatively be, for example, the first node or the second node. The second node may define or configure the correspondence based on the received second information and the first resolving key index from the control node. In this solution, resolving key indexes corresponding to different communication nodes are all from a same communication node. This facilitates unified management of the resolving key indexes, and can avoid a collision, on a local node, of a resolving key index of a peer node, thereby reducing duration required for address trustworthiness verification of the peer node, and ensuring communication efficiency and performance.

For example, the first resolving key index is from the second node. In this solution, the correspondence between the first resolving key index, the first resolving key, and the identity address can be configured or defined. The second node is prevented, each time the second node verifies address trustworthiness of the first node, from receiving the resolving key index, the resolving key information, and the identity address information that are sent by the first node. The duration required for the connection between the communication nodes is reduced, and communication efficiency and performance are ensured. In addition, the resolving key index is from the second node. This can avoid a collision, on the second node, of the resolving key index of the first node, that is, on the second node, avoid that a same resolving key index corresponding to different nodes, thereby reducing the duration required for address trustworthiness verification of the peer node, and further ensuring communication efficiency and performance.

With reference to the second aspect, in some implementations of the second aspect, before the sending first information to a second node, the method further includes: sending third information to the second node, where the third information indicates to determine the identity address of the first node based on a resolving key index and a to-be-resolved address.

For example, the resolving key information includes a resolving key and the resolving key index, or the resolving key information includes a resolving key.

For example, the identity address information includes a public device address and/or a static device address.

According to this solution, in one aspect, the second node can be enabled to determine the identity address of the first node by using the resolving key information, to ensure security of data transmission between the communication nodes. In another aspect, flexibility of determining the identity address of the first node by the second node can be improved, the computation duration required for address trustworthiness verification can be reduced, and communication efficiency and performance can be ensured.

For example, the third information is included in pairing request information sent by the first node. For example, the pairing request information includes security information distribution information, and the security information distribution information indicates whether to send the resolving key information and/or the identity address information. In this solution, the third information is implemented by using the pairing request information, so that signaling overheads can be reduced, and implementation is simple.

With reference to the second aspect, in some implementations of the second aspect, the method further includes: receiving fourth information from the second node, where the fourth information indicates whether to determine an identity address of the second node based on the resolving key index and the to-be-resolved address. According to this solution, in one aspect, the first node can be enabled to determine the identity address of the second node by using the resolving key information, to ensure security of data transmission between the communication nodes. In another aspect, flexibility of determining the identity address of the second node by the first node can be improved, the computation duration required for address trustworthiness verification can be reduced, and communication efficiency and performance can be ensured.

For example, the fourth information is included in pairing response information from the second node. For example, the pairing response information includes the security information distribution information, and the security information distribution information indicates whether to send the resolving key information and/or the identity address information. In this solution, the fourth information is implemented by using the pairing response information, so that signaling overheads can be reduced, and implementation is simple.

According to a third aspect, a communication apparatus is provided, including a processing unit and a transceiver unit, to perform the method according to any one of the first aspect and the possible implementations of the first aspect, or to perform the method according to any one of the second aspect and the possible implementations of the second aspect.

According to a fourth aspect, a communication apparatus is provided, including at least one processor and a transceiver. The at least one processor is configured to invoke a computer program stored in at least one memory, to perform the method according to any one of the first aspect and the possible implementations of the first aspect; or to perform the method according to any one of the second aspect and the possible implementations of the second aspect. The transceiver is configured to perform functions related to sending and receiving. Optionally, the transceiver includes a receiver and a transmitter, or a transmitter machine and a receiver machine.

With reference to the fourth aspect, in some implementations of the fourth aspect, the communication apparatus is a communication chip. The transceiver may be an input/output circuit or a port of the communication chip.

With reference to the fourth aspect, in some implementations of the fourth aspect, the communication apparatus further includes a memory. The memory is coupled to the processor included in the communication apparatus. The processor may be configured to execute instructions in the memory, to enable the apparatus to perform the method according to any one of the first aspect and the possible implementations of the first aspect, or perform the method according to any one of the second aspect and the possible implementations of the second aspect. Optionally, the apparatus may further include an interface circuit, and the processing module is coupled to the interface circuit.

According to a fifth aspect, a communication device is provided, including a communication apparatus configured to perform the method according to any one of the first aspect and the possible implementations of the first aspect, or a communication apparatus configured to perform the method according to any one of the second aspect and the possible implementations of the second aspect.

According to a sixth aspect, a chip is provided. The chip includes one or more processors and an interface circuit. The chip is configured to perform the method according to any one of the first aspect and the possible implementations of the first aspect, or is configured to perform the method according to any one of the second aspect and the possible implementations of the second aspect.

According to a seventh aspect, a communication system is provided. The communication system includes a communication apparatus configured to perform the method according to any one of the first aspect and the possible implementations of the first aspect, and a communication apparatus configured to perform the method according to any one of the second aspect and the possible implementations of the second aspect.

According to an eighth aspect, a computer-readable storage medium is provided. The computer-readable storage medium stores a computer program or instructions. When the computer program or the instructions are executed by a communication apparatus, the communication apparatus is enabled to perform the method according to any one of the first aspect and the possible implementations of the first aspect, or the communication apparatus is enabled to perform the method according to any one of the second aspect and the possible implementations of the second aspect.

According to a ninth aspect, a computer program product is provided. The computer program product includes a computer program or instructions. When the computer program or the instructions are executed by a communication apparatus, the communication apparatus is enabled to perform the method according to any one of the first aspect and the possible implementations of the first aspect, or the communication apparatus is enabled to perform the method according to any one of the second aspect and the possible implementations of the second aspect.

### BRIEF DESCRIPTION OF DRAWINGS

The following describes the accompanying drawings used in embodiments of this application.
FIG. 1 is a schematic diagram of an architecture of a communication system according to an embodiment of this application;
FIG. 2 is a schematic diagram of an application scenario of a communication method according to an embodiment of this application;
FIG. 3 is a schematic flowchart of a communication method according to an embodiment of this application;
FIG. 4 is a schematic diagram of public device address according to an embodiment of this application;
FIG. 5 is a schematic diagram of static device address according to an embodiment of this application;
FIG. 6 is a schematic diagram of a to-be-resolved address according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a schematic diagram of pairing request information according to an embodiment of this application;
FIG. 14 is a schematic diagram of pairing acknowledgment information according to an embodiment of this application;
FIG. 15 is a schematic diagram of initial pairing information according to an embodiment of this application;
FIG. 16 is a schematic diagram of a communication apparatus according to an embodiment of this application;
FIG. 17 is a schematic diagram of another communication apparatus according to an embodiment of this application; and
FIG. 18 is a schematic diagram of a structure of a chip according to an embodiment of this application.

### DESCRIPTION OF EMBODIMENTS

The following describes embodiments of this application with reference to the accompanying drawings in embodiments of this application. It should be noted that, in this application, a term like "example" or "for example" is for giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a relative concept in a specific manner.

In embodiments of this application, "at least one" means one or more, and "a plurality of" means two or more than two. "At least one of the following items (pieces)" or a similar expression thereof means any combination of these items (pieces), including any combination of singular items (pieces) or plural items (pieces). For example, at least one of a, b, or c may indicate a, b, c, (a and b), (a and c), (b and c), or (a, b, and c), where a, b, and c may be singular or plural. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between associated objects.

In addition, unless otherwise specified, ordinal numbers such as "first" and "second" used in embodiments of this application are for distinguishing between a plurality of objects, and are not intended to limit an order, a time sequence, priorities, or importance of the plurality of objects. For example, first information and second information are merely for distinguishing between different information, but do not indicate that the two types of information are different in content, priorities, sending sequences, or importance.

The following first describes technical terms in embodiments of this application.

### 1. Node (node)

The node is an electronic device that has data processing, receiving, and sending capabilities, or a component (for example, a chip or an integrated circuit) in the electronic device. The electronic device may include a terminal device or a network side device. For example, the node may be a cockpit domain (cockpit domain) device, or a module (for example, one or more of modules such as a cockpit domain controller (cockpit domain controller, CDC), a camera, a screen, a microphone, a speaker, an electronic key, and a passive entry passive start controller) in a cockpit domain device. In a specific implementation process, the node may alternatively be a data transfer device, for example, a base station, a router, a relay, a bridge, or a switch, or may be a terminal device, for example, various types of user equipment (user equipment, UE), a mobile phone (mobile phone), a tablet computer (pad), a desktop computer, a headset, or a speaker, or may further include a machine intelligent device, for example, a self-driving (self-driving) device, a transportation safety (transportation safety) device, a smart home device (for example, one or more of an audio and video device, a security device, a smart lighting device, or an environment monitoring device), a virtual reality (virtual reality, VR) terminal device, an augmented reality (augmented reality, AR) terminal device, a machine type communication (machine type communication, MTC) device, an industrial control (industrial control) device, remote medical (remote medical) device, a smart grid (smart grid) device, or a smart city (smart city) device, or may further include a wearable device (for example, a smart watch, a smart band, or a pedometer).

In some technical scenarios, a device having similar data receiving and sending capabilities may not be referred to as a node. However, for ease of description, electronic devices with the data receiving and sending capabilities are collectively referred to as a node in embodiments of this application.

### 2. Node address

A node may have at least one of two addresses: a public device address (public device address) and a random device address (random device address). Further, the random device address may be further classified into a static device address (static device address) and a private device address (private device address). The private device address may be further classified into a non-resolvable private address (non-resolvable private address) and a resolvable private address (resolvable private address). The following describes each address.

### 1. Public device address

In a communication system, the public device address is for uniquely identifying a physical device. In a design, the public device address of the device is fixedly allocated, for example, includes a 24-bit company identifier (company_id) and a 24-bit company assignment (company_assigned).

### 2. Random device address

The random device address is not fixedly allocated, but is randomly generated after a device is started. The random device address is classified into the static device address and the private device address based on different purposes.

### (1) Static device address

The static device address is randomly generated when a node is powered on. In a design, the static device address remains unchanged during a power-on cycle, and the static device address may change or remain unchanged during a next time of power-on. If the static device address changes during the next time of power-on, information stored last time, for example, a connection, is no longer valid.

### (2) Private device address

The private device address is updated periodically and encrypted to improve reliability and security of a node address. The private device address is further classified into a non-resolvable private address and a resolvable private address based on whether the node address is encrypted.

### (2-1) Non-resolvable private address

The non-resolvable private address is similar to a static device address. A difference lies in that the non-resolvable private address is updated every other specific cycle. In a design, an update cycle of the non-resolvable private address may be stipulated in a protocol, for example, X minutes, where X is an integer. The non-resolvable private address may be updated every other update cycle.

### (2-2) Resolvable private address

The resolvable private address is generated by using at least a random number and a key. In a design, the resolvable private address is generated by using a random number and a key referred to as an identity resolving key (identify resolving key, IRK). For example, the resolvable private address includes two parts: a random number part, and a hash value obtained through hash (hash) computation of the random number and the IRK. The resolvable private address can be obtained through scanning only by a device that has the same IRK, so that an unknown device cannot obtain the resolvable private address. Because the IRK may be for encryption, the IRK may also be referred to as an encryption key.

In embodiments of this application, for example, an identity address may include one or both of the following: a public device address and a static device address. A node address may include one or both of a public device address and a static device address, and one or more private device addresses.

### 3. Resolving list

To protect an address of a node (and a peer node) from being obtained, = local (local) and peer (peer) addresses and encryption keys (IRKs) may be stored in a resolving list (resolving list). Each entry in the resolving list stores key/address information of a pair of nodes, and a format of the key/address information may be Local IRK|Peer IRK|Peer Device Identity Address|Address Type.

The Local IRK is the local IRK, and is for generating a resolvable private address of the local node. For example, when sending a data packet, the node first determines whether a non-zero Local IRK exists in the resolving list, and if yes, generates a resolvable private address by using the Local IRK, otherwise, directly uses the identity address as the local address. The Peer IRK is an IRK of the peer node, and is for resolving a resolvable private address of the peer node into an identity address. For example, after receiving the data packet, if the data packet includes the identity address, the peer node directly performs subsequent processing on data, or if the data packet includes the resolvable private address, the peer node resolves the received resolvable private address by using the Peer IRK included in the resolving list. The Peer Device Identity Address and the Address Type are respectively an identification address and an address type of the peer node, and are for uniquely identifying the peer node in a process of connection and/or pairing between the nodes. For example, the identification address may be one of the following addresses: a public device address, a static device address, a non-resolvable private address, and a resolvable private address.

### 4. Cryptographic algorithm

The cryptographic algorithm may be a mathematical function for one or more of encrypting, decrypting, or generating a key, deriving a password, and the like, and may also be referred to as a cryptographic function. A common cryptographic algorithm includes a hash algorithm, an encryption algorithm, an authentication algorithm, a key derivation algorithm (Key derivation function, KDF), an authentication algorithm, or the like.

### (1) Hash algorithm

The hash algorithm is also referred to as a hash (Hash) function or a hash algorithm. The hash algorithm may be for converting information in any size into an identifier, and it is difficult to find an inverse rule.

### (2) Encryption (encryption) algorithm

The encryption algorithm includes a symmetric encryption algorithm and an asymmetric encryption algorithm. Usually, an encryption key of the symmetric encryption algorithm is the same as a decryption key, and an encryption key of the asymmetric encryption algorithm is different from a decryption key. In addition, there is a hash algorithm that does not require a key. Common symmetric encryption algorithms mainly include a data encryption standard (data encryption standard, DES), a triple data encryption algorithm (triple data encryption algorithm, 3DES), an advanced encryption standard (advanced encryption standard, AES), and the like. Common asymmetric algorithms mainly include an RSA encryption algorithm, a data structure analysis (data structure analysis, DSA) algorithm, and the like. The hash algorithm mainly includes a secure hash algorithm (secure hash algorithm 1, SHA-1), a message digest (message digest, MD) algorithm (for example, MD2, MD4, or MD5), and the like.

### (3) Integrity protection algorithm

The integrity protection algorithm is an algorithm for protecting message integrity, and may also be referred to as a MAC (message authentication code, MAC) algorithm or an integrity protection algorithm. For example, an integrity protection algorithm implemented according to a hash algorithm is referred to as a hash-based message authentication code (hash-based message authentication code, HMAC) algorithm. The hash algorithm may be one of MD5, SHA-1, SHA-256, or the like. These different HMAC implementations are usually marked as HMAC-MD5, HMAC-SHA1, HMAC-SHA256, and the like.

In some specific scenarios, data may be encrypted and a message authentication code may also be generated for a given original text according to an authentication encryption algorithm. Therefore, the authentication encryption algorithm may be used as both an encryption algorithm and the integrity protection algorithm. For example, an AES algorithm based on a Galois message authentication code mode (Galois message authentication code mode, GMAC) and a counter mode (AES-Galois/counter mode, AES-GCM) and an AES algorithm based on a cipher-based message authentication code (Cipher-based Message Authentication Code, CMAC) and a counter mode (AES-CMAC/counter Mode, AES-CCM) may be used for message authentication and encryption. A MAC address can be generated in an authentication and encryption process to protect message integrity.

### (4) Key derivation algorithm

The key derivation algorithm is for deriving one or more secret values from a secret value, and is also referred to as a key derivation algorithm. For example, a new secret value derived from a secret value Key may be represented as follows: DK=KDF(Key). Common key derivation algorithms include a password-based key derivation function (password-based key derivation function, PBKDF), a scrypt (scrypt) algorithm, and the like. The PBKDF algorithm further includes first-generation PBKDF 1 and second-generation PBKDF 2. Optionally, in a process of deriving a key according to some KDF algorithms, a hash algorithm is used to perform a hash change on an input secret value. Consequently, an algorithm identifier may be further received as an input in a KDF function, to indicate a hash algorithm to be used.

### 5. Trustlist

In embodiments of this application, the trustlist includes one or more node addresses, and a node corresponding to the node address included in the trustlist may be understood as a node trusted by a local node. For example, according to the trustlist, only the node included in the trustlist is allowed to scan (scan) and connect (connect) to the local node, and/or according to the trustlist, the local node can also scan and connect to only a specific node (listed in the trustlist). For example, the node address stored in the trustlist may be one or more of the following addresses: a public device address and a static device address.

The following describes a system architecture and a service scenario in embodiments of this application. It should be noted that the system architecture and the service scenario that are described in this application are intended to describe the technical solutions in this application more clearly, and do not constitute a limitation on the technical solutions provided in this application. A person of ordinary skill in the art may know that, with evolution of the system architecture and emergence of a new service scenario, the technical solutions provided in this application are also applicable to similar technical problems.

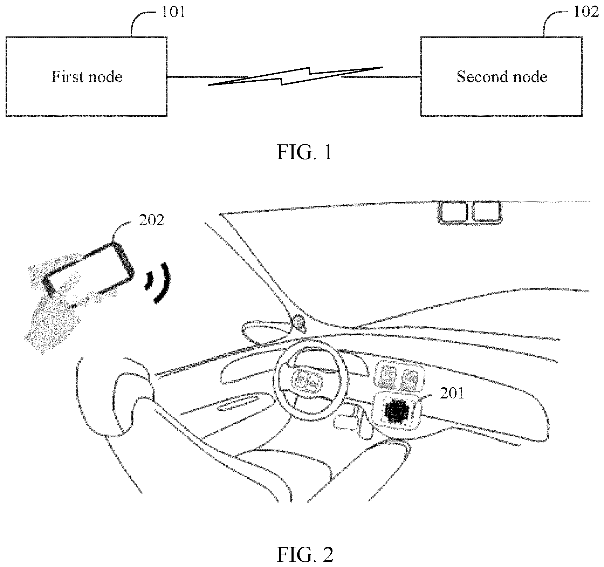

FIG. 1 is a schematic diagram of an architecture of a possible communication system according to an embodiment of this application. The communication system includes a first node 101 and a second node 102.

The first node 101 and the second node 102 may establish an association. It should be noted that, in this embodiment of this application, "association", "connection", and "pairing" may all indicate a process in which the first node and the second node establish a connection. After the first node 101 and the second node 102 are successfully associated, the first node 101 may communicate with the second node 102.

A communication link between the first node 101 and the second node 102 may include various types of connection media, including a wired link (for example, an optical fiber), a wireless link, a combination of a wired link and a wireless link, or the like. The first node 101 and the second node 102 may implement communication by using various connection technologies. For example, the connection technology may be a short-range connection technology, including 802.11b/g, Bluetooth (Bluetooth), zigbee (Zigbee), radio frequency identification (radio frequency identification, RFID), an ultra-wideband (ultra-wideband, UWB) technology, or another possible wireless short-range communication technology (for example, a vehicle-mounted wireless short-range communication technology). For another example, the connection technology may alternatively be a long-range connection technology, including a technology of a radio access type, for example, a long term evolution (Long Term Evolution, long term evolution)-based communication technology, a 5th generation mobile communication technology (5th generation mobile network, 5th generation wireless system, or 5th-Generation, 5G or 5G technology for short), a global system for mobile communications (global system for mobile communications, GSM), a general packet radio service (general packet radio service, GPRS), or a universal mobile telecommunications system (universal mobile telecommunications system, UMTS). Certainly, there is another wireless communication technology that may support communication between the first node and the second node. This is not specifically limited in embodiments of this application.

The first node 101 and the second node 102 may be devices of a same type, or may be devices of different types. For example, FIG. 2 is a schematic diagram of a possible communication scenario according to an embodiment of this application. A CDC 201 of a vehicle is a control center in an intelligent cockpit device of the vehicle, and may be considered as the first node 101. A smartphone 202 is a device having data receiving and sending capabilities, and may be considered as the second node 102. The CDC 201 may be associated with another device by using various types of connection technologies. The smartphone 202 supports a corresponding communication function. Consequently, the smartphone 202 may establish a connection to the CDC 201 by using the corresponding communication technology. For example, in some specific implementation scenarios, the first node may also be referred to as a G node, a control node, or an access point (access point), and the second node may also be referred to as a T node or a terminal. A communication link from the G node to the T node may be referred to as a G link, and a communication link from the T node to the G node may be referred to as a T link.

Based on the communication system shown in FIG. 1, in a possible procedure in which two nodes establish a connection, each of the two nodes adds a device address of the peer node to a trustlist of the local node, to indicate that the peer node is a device trusted by local node. However, a device address stored in the trustlist is fixed to some extent. Therefore, an attacker may obtain the device address when the node performs advertising (advertising).

To resolve this problem, the two nodes can exchange respective resolvable private device addresses. When one node obtains a resolvable private device address of another node through scanning, the node performs a hash operation using an IRK stored on the local node and a random number in the resolvable private device address obtained through scanning, and compares a hash operation result with a hash field in the resolvable private device address. When the hash operation result and the hash field are the same, it may indicate that the resolvable private device address is successfully resolved, or it indicates that address verification on a device that sends the resolvable private device address succeeds. In this case, the node performs a subsequent operation. The resolvable private device address is randomly generated. Therefore, it is difficult to find the device that sends the resolvable private device address. In addition, the resolvable private device address can be obtained through scanning by only a device that has the same IRK, a device without the IRK cannot obtain the resolvable private device address.

However, in this manner, when the device stores a plurality of IRKs, the device needs to resolve, by using each stored IRK, the resolvable private device address obtained through scanning, until all the IRKs are tried or the resolvable private device address obtained through scanning is successfully resolved with one of the IRKs. It takes a long time to resolve, by using the IRK, the resolvable private device address obtained through scanning. As a result, trustworthiness verification of a device address takes a long time, and communication efficiency and performance are reduced.

In view of this, embodiments of this application provide a communication method. In the method, a second node receives first information from a first node, where the first information includes a first to-be-resolved address and a first resolving key index that are of the first node; and determines an identity address of the first node based on the first resolving key index and the first to-be-resolved address, where the identity address uniquely identifies the first node. In this manner, the first node and the second node communicate with each other by using a to-be-resolved address. This can ensure security of information transmission between communication nodes. Further, the second node can determine a first resolving key based on the first resolving key index, without resolving the received first to-be-resolved address by traversing all locally stored resolving keys. This reduces duration required for trustworthiness verification of a device address, and ensures the communication efficiency and performance.

With reference to a specific embodiment, the following describes the communication method provided in embodiments of this application.

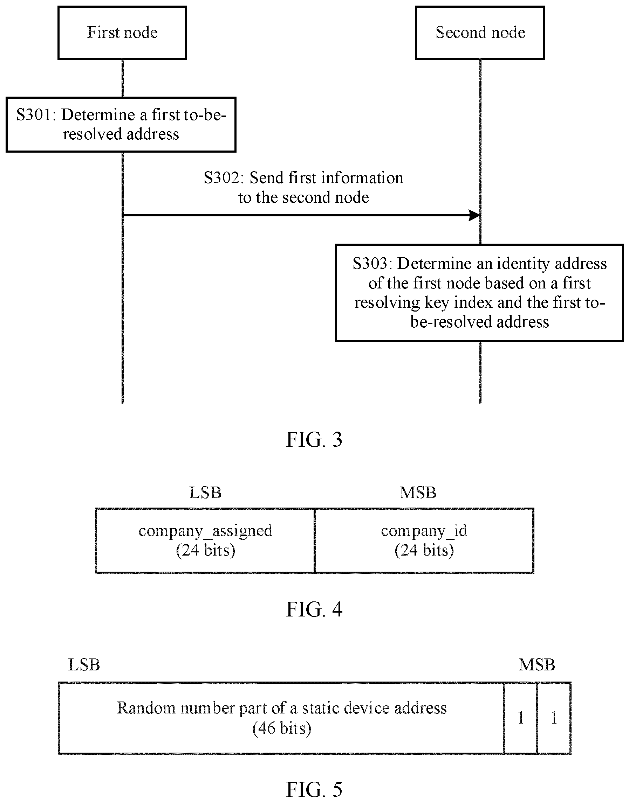

FIG. 3 is a schematic flowchart corresponding to a communication method according to an embodiment of this application. Further, the method may be implemented based on the architecture shown in FIG. 1. The method may include the following steps.

S301: A first node determines a first to-be-resolved address.

In a possible implementation, the first to-be-resolved address includes an address generated by encrypting an identity address of the first node by using a key. Further, encryption herein may be implemented according to the cryptographic algorithm described above or another encryption algorithm. This is not specifically limited. The identity address of the first node may uniquely identify the first node. For example, the identity address of the first node is fixed to some extent. For example, the identity address of the first node may be a public device address. The public device address is fixedly allocated, and the public device address remains unchanged during different power-on cycles of the first node. FIG. 4 is a schematic diagram of a possible public device address according to an embodiment of this application. The public device address includes company_id (24 bits) of most significant bits (most significant bits, MSBs) and company_assigned (24 bits) of least significant bits (least significant bits, LSBs). For another example, the identity address of the first node may be a static device address. The static device address is randomly generated, remains unchanged in one power-on cycle, and may remain unchanged or change in a next power-on cycle. FIG. 5 is a schematic diagram of a possible static device address according to an embodiment of this application. The static device address includes 48 bits. Two most significant bits are "11", and the other 46 bits are a random number, cannot all be 0, and cannot all be 1.

In another possible implementation, the first to-be-resolved address includes verification information for verifying a first resolving key. The first resolving key corresponds to the identity address of the first node. The first resolving key may be an identity resolving key IRK, or may be a key generated according to a key derivation algorithm, or may be in another form. This is not specifically limited. For the identity address of the first node, refer to the foregoing descriptions. Details are not described herein again.

For example, the first node determines, based on the first resolving key and the identity address of the first node, the verification information for verifying the first resolving key. For example, the first node performs a cryptographic operation on the first resolving key and the identity address of the first node, to obtain a cryptographic operation output value. The cryptographic operation output value is the verification information or a part of the verification information. For another example, the first node performs an irreversible encryption operation, for example, performs a hash (hash) operation, on the first resolving key and the identity address of the first node, to obtain the verification information. The verification information satisfies a condition that the verification information equals ah(the IRK, the identity address of the first node). Herein, ah(the IRK, the identity address of the first node) indicates that the hash operation is performed on the identity address of the first node by using the encryption key IRK. Specifically, a hash algorithm may be, for example, one of MD5, SHA-1, SHA-256, and SM3, or may be another implementation. This is not specifically limited. It should be noted that, in this implementation, the identity address of the first node may alternatively be replaced with another address, for example, an address generated by the first node according to a specific rule. This is not specifically limited.

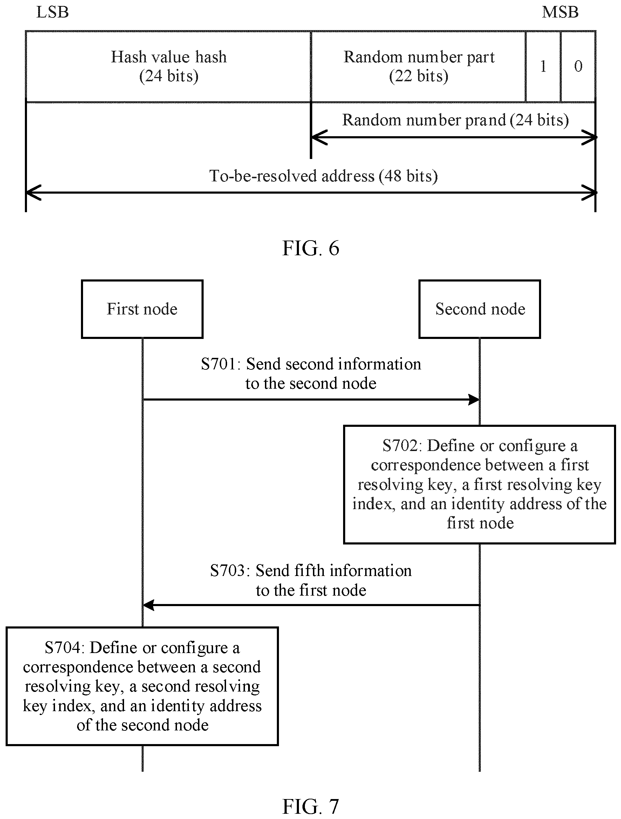

For another example, the first to-be-resolved address further includes a random number. The first node obtains the verification information based on the first resolving key and the random number. For example, the first node performs a cryptographic operation on the first resolving key and the random number, to obtain a cryptographic operation output value. The cryptographic operation output value is the verification information. For example, the first node performs an irreversible encryption operation, for example, performs a hash (hash) operation, on the first resolving key and the random number, to obtain the verification information. The verification information satisfies a condition that the verification information equals ah(the IRK, the random number). Herein, ah(the IRK, the random number) indicates that the hash operation is performed on the random number by using the encryption key IRK. A hash algorithm may be one of MD5, SHA-1, SHA-256, and SM3, or may be another implementation. This is not specifically limited. For another example, the first node encrypts the first resolving key and the random number. A specific encryption algorithm may be, for example, the encryption algorithm described above. Details are not described herein again. In this implementation, optionally, the random number may include 24 bits. Two MSBs in the random number may indicate an address type of the first to-be-resolved address, and a value is, for example, 10. Each of the other 22 bits is a randomly generated number, and a value is 0 or 1. FIG. 6 is a schematic diagram of a possible to-be-resolved address according to an embodiment of this application. The to-be-resolved address includes 48 bits, including a 24-bit random number prand and a 24-bit hash value hash. Further, values of a most significant bit and a second most significant bit in prand are respectively 0 and 1, and each of the other 22 bits is a randomly generated number. The hash value may correspond to the verification information described above, that is, is obtained through computation based on the resolving key and the random number prand. A specific computation manner is described above. Details are not described herein again.

For example, the first to-be-resolved address may be a resolvable private address.

S302: The first node sends first information to a second node, where the first information includes the first to-be-resolved address and a first resolving key index, and the first resolving key index indicates the first resolving key.

Correspondingly, the second node receives the first information.

In a possible implementation, the first node may send the first information in an advertising manner. Correspondingly, the second node receives the first information advertised by the first node.

The first to-be-resolved address included in the first information and the first resolving key index included in the first information may be sent by using a same message, or may be sent by using different messages. For example, the first node sends the first to-be-resolved address and the first resolving key index by using a message A. For another example, the first node sends the first to-be-resolved address by using a message A, and sends the first resolving key index by using a message B.

Optionally, the first information may further include address type information of the first to-be-resolved address. For example, the address type information of the first to-be-resolved address indicates that the address type of the first to-be-resolved address is a resolvable private address.

S303: The second node determines the identity address of the first node based on the first resolving key index and the first to-be-resolved address.

Specifically, the second node determines, based on the first resolving key index, the first resolving key indicated by the first resolving key index. The first resolving key corresponds to a first identity address.

For example, a predefined or preconfigured correspondence exists between the first resolving key index, the first resolving key, and the first identity address. The second node can determine, based on the correspondence, the first resolving key indicated by the first resolving key index. Further, optionally, the correspondence may be presented, for example, by using a table. For example, refer to Table 1. Table 1 is a table of a possible correspondence according to an embodiment of this application. In Table 1, a Peer IRK ID indicates a resolving key index of a peer node, and a Peer IRK in a same row as the Peer IRK ID indicates a resolving key of the peer node corresponding to the Peer IRK ID. A peer node identity address in the same row as the Peer IRK ID and the Peer IRK indicates an identity address corresponding to one or more of the Peer IRK ID and the Peer IRK. It should be noted that, in this embodiment of this application, the first resolving key index is an example of the Peer IRK ID, the first resolving key is an example of the Peer IRK, and the first identity address is an example of the peer node identity address. Specifically, for example, a Peer IRK ID, a Peer IRK, and a Peer Device Identity Address included in a second row in Table 1 respectively indicate a resolving key index, a resolving key, and the identity address of the first node. A Peer IRK ID, a Peer IRK, and a Peer Device Identity Address included in a third row in Table 1 respectively indicate a resolving key index, a resolving key, and an identity address of another node other than the first node and the second node, for example, a third node. For another example, for the correspondence, refer to Table 2. Table 2 is a table of another possible correspondence according to an embodiment of this application. The second node is used as an example. A local node resolving key index indicates a resolving key index of the second node, and a local node resolving key indicates a resolving key of the second node. The "local node resolving key index" is optional in Table 2. It should be noted that a table that includes a correspondence between a resolving key index, a resolving key, and an identity address may alternatively have another form. For example, Table 1 may further include one or two of the local node resolving key index, the local node resolving key, and a peer node identity address type. This is not specifically limited. Optionally, in this embodiment of this application, the table including the correspondence may be a resolving list.

It should be noted that, in this embodiment of this application, a same peer node resolving key index may alternatively correspond to a plurality of different peer node resolving keys. For example, a Peer IRK ID included in a second row in Table 1 is the same as a Peer IRK ID included in a third row, but a Peer IRK included in the second row in Table 1 is different from a Peer IRK included in the third row.

**Table 1: An implementation of a correspondence between a resolving key index, a resolving key, and an identity address**

| Peer node resolving key index | Peer node resolving key | Peer node identity address |
|---|---|---|
| Peer IRK ID | Peer IRK | Peer Device Identity Address |
| Peer IRK ID | Peer IRK | Peer Device Identity Address |

**Table 2: Another implementation of a correspondence between a resolving key index, a resolving key, and an identity address**

| Local node resolving key index | Local node resolving key | Peer node resolving key index | Peer node resolving key | Peer node identity address | Peer node identity address type |
|---|---|---|---|---|---|
| Local IRK ID | Local IRK | Peer IRK ID | Peer IRK | Peer Device Identity Address | Address Type |
| Local IRK ID | Local IRK | Peer IRK ID | Peer IRK | Peer Device Identity Address | Address Type |

The following describes several possible implementations in which the second node determines the identity address of the first node based on the first resolving key index and the first to-be-resolved address. It should be noted that, in this embodiment of this application, there may alternatively be another implementation in which the second node determines the identity address of the first node based on the first resolving key index and the first to-be-resolved address. This is not specifically limited.

In a possible implementation, the second node determines the first resolving key based on the received first resolving key index, decrypts the first to-be-resolved address by using the first resolving key, and then determines the identity address of the first node. For example, the second node determines the first resolving key based on the received first resolving key index and a correspondence between the first resolving key index and the first resolving key, then decrypts the received first to-be-resolved address by using the first resolving key, and compares a decryption result with the locally stored peer node identity address. It should be noted that the peer node identity address herein corresponds to the first resolving key, and is an identity address stored on the second node. In one aspect, if the decryption result is the same as the peer node identity address, the second node determines that the first node is a trusted device node or determines that the peer node identity address is the identity address of the first node. Further, the second node may perform a subsequent operation. For example, after determining the identity address of the first node, the second node may initiate a connection to the first node. For another example, the second node compares the determined identity address of the first node with a device address in a locally stored trustlist. If the device address in the locally stored trustlist includes the identity address of the first node, it may indicate that the first node is a node trusted by the second node. Then, the second node may perform subsequent data transmission with the first node. For still another example, the second node compares the identity address of the first node with a device address in a locally stored trustlist. If the locally stored trustlist does not include the identity address of the first node, the second node may first add the identity address of the first node to the trustlist, and then perform subsequent data transmission with the first node. In another aspect, if the decryption result is different from the peer node identity address, the second node determines that the first node is not a trusted device node, or determines that the peer node identity address corresponding to the first resolving key is not the identity address of the first node. A subsequent operation of the second node may include one or more of the following: not establishing a connection to the first node, and sending a connection establishment failure message to the first node; and sending an address resolution failure message to the first node, and requesting to obtain the identity address of the first node.

In another possible implementation, the second node determines the first resolving key based on the received first resolving key index, then computes local verification information, and compares the local verification information with the verification information included in the first to-be-resolved address. A comparison result includes the following two cases.

Case 1: The local verification information is the same as the verification information included in the first to-be-resolved address.

In this case, the second node can determine that the first identity address corresponding to the first resolving key is the identity address of the first node. Table 2 is used as an example. If the second node determines that the local verification information is the same as the verification information included in the first to-be-resolved address, the peer node identity address (namely, the first identity address) corresponding to the first to-be-resolved address (namely, the peer node resolving key) in Table 2 is the identity address of the first node. Further, in this case, the second node may perform a subsequent operation. For a specific subsequent operation, refer to the subsequent operation performed in the foregoing implementation when the decryption result is the same as the peer node identity address. Details are not described herein again.

Case 2: The local verification information is different from the verification information included in the first to-be-resolved address.

In this case, the second node can determine that the first identity address corresponding to the first resolving key is not the identity address of the first node. For a subsequent operation of the second node, refer to the subsequent operation performed in the foregoing implementation when the decryption result is different from the peer node identity address. Details are not described herein again.

Further, corresponding to the foregoing implementation in which the first node determines the verification information for verifying the first resolving key, the following two implementations in which the second node computes the local verification information are enumerated in this embodiment of this application.

Implementation 1: The second node determines the first resolving key and the first identity address that correspond to the first resolving key index, and computes the local verification information based on the first resolving key and the first identity address. For example, Table 2 is used as an example. The second node finds, based on the received first resolving key index, a peer node resolving key index corresponding to the first resolving key index in Table 2. For example, if the first resolving key index received by the second node is 2, the peer node resolving key index corresponding to the first resolving key index in Table 2 is also 2. Then, the second node computes the local verification information based on a peer node resolving key and a peer node identity address that correspond to the peer node resolving key index. Further, for example, the second node performs an irreversible encryption operation, for example, a hash operation, on the peer node resolving key and the peer node identity address, to obtain the local verification information. For details, refer to the related content in step S301. The details are not described herein again.

Implementation 2: The first to-be-resolved address includes the random number. The second node determines the first resolving key corresponding to the first resolving key index, and computes the local verification information based on the first resolving key and the random number. For a process in which the second node determines the first resolving key corresponding to the first resolving key index, refer to the related content in Implementation 1. Details are not described herein again. Then, the second node computes the local verification information based on the peer node resolving key corresponding to the peer node resolving key index and the random number included in the first to-be-resolved address. For example, the second node performs an irreversible encryption operation, for example, a hash operation, on the peer node resolving key and the random number, to obtain the local verification information. For details, refer to the related content in step S301. The details are not described herein again.

It should be noted that, on the second node, when the peer node resolving key index corresponding to the received first resolving key index corresponds to N peer node resolving keys, where N is an integer greater than 1, the second node needs to repeat, for the N peer node resolving keys, the foregoing process of determining the identity address of the first node, until the identity address of the first node is determined by using one of the N peer node resolving keys or all the N peer node resolving keys are tried. For example, on the second node, a peer node resolving key index 1 corresponds to three peer node resolving keys: a key 1, a key 2, and a key 3, and corresponds to peer node identity addresses: an address 1, an address 2, and an address 3. If the first resolving key index received by the second node is 1, the second node needs to separately compute local verification information by using the key 1, the key 2, the key 3, and the received first to-be-resolved address, and compares the verification information computed based on different peer node resolving keys with the verification information included in the first to-be-resolved address, to determine whether the received first to-be-resolved address is associated with the stored resolving key. Specifically, for example, the second node first attempts to compute the local verification information by using the key 1 and the random number included in the first to-be-resolved address. If the obtained local verification information is the same as the verification information included in the received first to-be-resolved address, it may be determined that the corresponding peer node identity address (the address 1) is the identity address of the first node. On the contrary, if the obtained local verification information is different from the verification information included in the received first to-be-resolved address, the second node continues to attempt to compute the local verification information by using the key 2, the key 3, and the random number included in the received first to-be-resolved address, until the identity address of the first node is determined or the key 2 and the key 3 are both used. It may be understood that, in this embodiment of this application, if the verification information obtained through computation based on the stored resolving key and the received first to-be-resolved address is the same as the verification information included in the first to-be-resolved address, it indicates that the received first to-be-resolved address is associated with the stored resolving key. In the foregoing manner, the second node can determine, by using the first resolving key index sent by the first node, the first resolving key indicated by the first resolving key index, and then determine the identity address of the first node, without determining the identity address of the first node by traversing all locally stored peer node resolving keys. When the first resolving key index corresponds to a plurality of peer node resolving keys, the second node needs to traverse only the locally stored peer node resolving keys corresponding to the first resolving key index, without determining the identity address of the first node by traversing all locally stored peer node resolving keys. Therefore, in the foregoing manner, computation duration for address resolution is reduced, duration required for trustworthiness verification of a device address is reduced, and communication efficiency and performance are ensured. In addition, the second node receives the first to-be-resolved address of the first node, the to-be-resolved address may be randomly generated, and the hash operation may be performed on the to-be-resolved address by using the first resolving key. Therefore, it is ensured that the identity address of the first node is difficult to obtain, and further, security and reliability of data transmission between the first node and the second node are ensured.

In this embodiment of this application, the predefined or preconfigured correspondence exists between the first resolving key, the first resolving key index, and the first identity address. The second node can determine, based on the correspondence, the first resolving key corresponding to the first resolving key index, and resolve the received first to-be-resolved address by using the first resolving key, to determine whether the identity address of the first node is the first identity address corresponding to the first resolving key index or the first resolving key. For example, the second node determines the local verification information based on the first resolving key determined based on the correspondence, compares the local verification information with the verification information included in the first to-be-resolved address, and determines the first identity address.

It may be understood that a predefined or preconfigured correspondence also exists between a second resolving key, a second resolving key index, and a second identity address. The first node can determine, based on the correspondence, the second resolving key corresponding to the second resolving key index, and resolve a received second to-be-resolved address by using the second resolving key, to determine whether an identity address of the second node is the second identity address corresponding to the second resolving key index or the second resolving key. For example, the first node determines local verification information based on the second resolving key determined based on the correspondence, compares the local verification information with verification information included in the second to-be-resolved address, and determines the second identity address.

In a possible implementation, the communication method in embodiments of this application may further include one or more of step S701 to step S704 shown in FIG. 7. The one or more steps may be mandatory in some specific scenarios. Step S701 to step S704 are specifically as follows.

S701: The first node sends second information to the second node, where the second information includes the first resolving key and the identity address of the first node.

Correspondingly, the second node receives the second information.

In this embodiment of this application, the first resolving key and the identity address of the first node that are included in the second information may be sent by using a same message, or may be sent by using different messages. For example, the first node sends the first resolving key by using a message C1, and sends the identity address of the first node by using a message D1. Further, optionally, the message C1 is a message that carries identity authentication key information. The message D1 is a message that carries identity address information. For example, the message D1 may further include an address type corresponding to the identity address of the first node. For example, the address type is a public device address type or a static device address type. For another example, the first node sends the first resolving key and the identity address of the first node by using a message E1.

S702: The second node defines or configures the correspondence between the first resolving key, the first resolving key index, and the identity address of the first node. For a specific manner of obtaining the first resolving key index, refer to the following descriptions. Definition or configuration herein means that the second node may maintain the foregoing correspondence, but a specific storage manner is not specifically limited.

For example, the second node stores or writes the first resolving key, the first resolving key index, and the identity address of the first node in a same row in a table. For a specific implementation of the table, refer to the descriptions in step S303. Details are not described herein again. It should be noted that "store" and "write" mentioned in this embodiment of this application may indicate that a correspondence between a resolving key, a resolving key index, and an identity address is represented in a table, or may be described in another manner. This is not specifically limited.

S703: The second node sends fifth information to the first node, where the fifth information includes the second resolving key of the second node and the identity address of the second node.

In this embodiment of this application, for the second resolving key and the identity address of the second node, refer to the foregoing descriptions of the first resolving key and the identity address of the first node. For example, the identity address of the second node may uniquely identify the second node.

Correspondingly, the first node receives the fifth information.

In this embodiment of this application, the second resolving key and the identity address of the second node that are included in the fifth information may be sent by using a same message, or may be sent by using different messages. For example, the second node sends the second resolving key by using a message C2, and sends the identity address of the first node by using a message D2. Further, optionally, the message C2 is a message that carries identity authentication key information. The message D2 is a message that carries identity address information. For example, the message D2 may further include an address type corresponding to the identity address of the second node. For example, the address type is a public device address or a static device address. For another example, the second node sends the second resolving key and the identity address of the second node by using a message E2.

S704: The first node defines or configures the correspondence between the second resolving key, the second resolving key index, and the identity address of the second node. For a specific manner of obtaining the second resolving key index, refer to the following descriptions. Definition or configuration herein means that the first node may maintain the foregoing correspondence, but a specific storage manner is not specifically limited.

For example, the first node stores or writes the second resolving key, the second resolving key index, and the identity address of the second node in a same row in a table. For a specific implementation of the table, refer to the descriptions in step S303. Details are not described herein again.

Optionally, a step in the method in the embodiment shown in FIG. 7 may be a previous step of the method in the embodiment shown in FIG. 3.

In the foregoing manner, a local node can preconfigure a correspondence between a resolving key index, a resolving key, and an identity address of a peer node, and then determine an identity address of the peer node based on a received resolving key index of the peer node. In this way, the local node and the peer node do not need to exchange respective resolving key indexes, resolving keys, and identity addresses each time the local node verifies device address trustworthiness of the peer node. This reduces duration required for a connection between the nodes, and ensures communication efficiency and performance.

Further, before configuring the resolving key index, the identity address of the node, and the resolving key index, the node may first obtain the resolving key index. For example, the node may obtain the resolving key index in one of the following three manners.

Manner 1: The resolving key index of the peer node stored by the local node is from the peer node. For example, the second information further includes the first resolving key index, and the fifth information further includes the second resolving key index.

It should be noted that, in this embodiment of this application, the resolving key index (for example, the first resolving key index or second resolving key index) may be generated randomly, allocated according to a fixed algorithm, or preconfigured before delivery. For example, the first resolving key index of the first node is configured before delivery of the first node. It should be noted that resolving key indexes corresponding to different nodes may be generated in different manners. For example, the first resolving key index may be allocated according to a fixed algorithm, and the second resolving key index may be randomly generated.

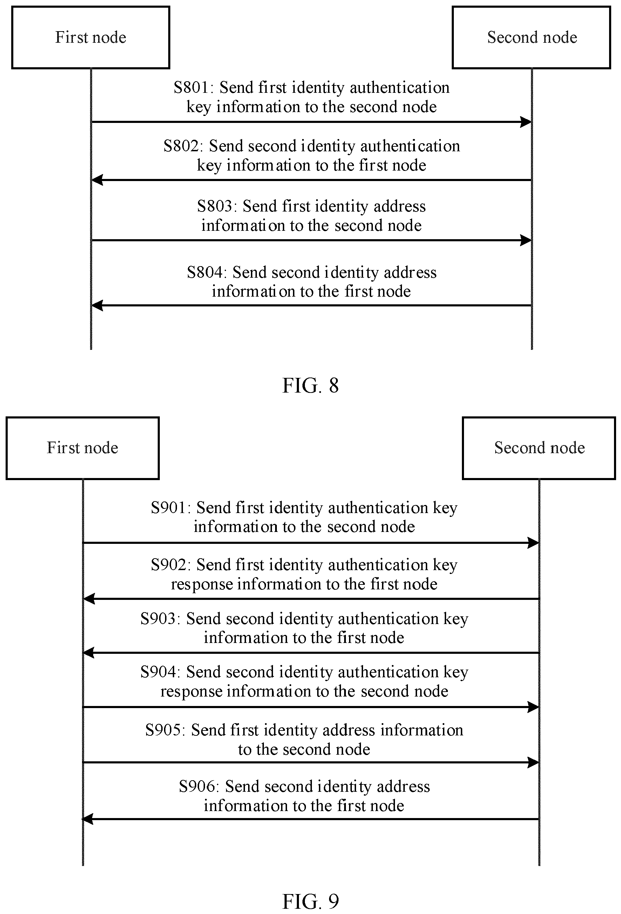

For example, before the method in the embodiment shown in FIG. 3, the communication method in embodiments of this application may further include one or more steps in steps S801 to S804 shown in FIG. 8. The one or more steps may be mandatory in some specific scenarios. It may be understood that a communication method shown in FIG. 8 may be a possible implementation based on the communication method shown in FIG. 7. In this implementation, the second information in FIG. 7 includes but is not limited to first identity authentication key information and first identity address information. The fifth information in FIG. 7 includes but is not limited to second identity authentication key information and second identity address information. Step S801 to step S804 are specifically as follows.

S801: The first node sends the first identity authentication key information to the second node, where the first identity authentication key information includes the first resolving key and the first resolving key index.

Correspondingly, the second node receives the first identity authentication key information.

S802: The second node sends the second identity authentication key information to the first node, where the second identity authentication key information includes the second resolving key and the second resolving key index.

Correspondingly, the first node receives the second identity authentication key information.

S803: The first node sends the first identity address information to the second node, where the first identity address information includes the identity address of the first node and the address type of the identity address.

Correspondingly, the second node receives the first identity address information.

S804: The second node sends the second identity address information to the first node, where the second identity address information includes the identity address of the second node and the address type of the identity address.

Correspondingly, the first node receives the second identity address information. For a specific implementation, refer to the detailed descriptions in the embodiment shown in FIG. 6. Details are not described herein again.

Manner 2: The resolving key index of the peer node stored by the local node is from the local node. For example, the first resolving key index is determined by the second node, and is sent by the second node to the first node. The second resolving key index is determined by the first node, and is sent by the first node to the second node. For a manner of determining the resolving key index, refer to the descriptions in Solution 1. Details are not described herein again.

For example, before the method in the embodiment shown in FIG. 3, the communication method in embodiments of this application may further include one or more steps in steps S901 to S906 shown in FIG. 9. The one or more steps may be mandatory in some specific scenarios. It may be understood that a communication method shown in FIG. 9 may be another possible implementation based on the communication method shown in FIG. 7. In this implementation, the second information in FIG. 7 includes but is not limited to first identity authentication key information, second identity authentication key response information, and first identity address information. The fifth information in FIG. 7 includes but is not limited to first identity authentication key response information, second identity authentication key information, and second identity address information. Step S901 to step S906 are specifically as follows.

S901: The first node sends the first identity authentication key information to the second node, where the first identity authentication key information includes the first resolving key.

Correspondingly, the second node receives the first identity authentication key information.

S902: The second node sends the first identity authentication key response information to the first node, where the second identity authentication key response information includes the first resolving key index corresponding to the first resolving key.

Correspondingly, the first node receives the first identity authentication key response information. S903: The second node sends the second identity authentication key information to the first node, where the second identity authentication key information includes the second resolving key.

Correspondingly, the first node receives the second identity authentication key information.

S904: The first node sends the second identity authentication key response information to the second node, where the second identity authentication key response information includes the second resolving key index corresponding to the second resolving key.

Correspondingly, the second node receives the second identity authentication key response information.

S905: The first node sends the first identity address information to the second node, where the first identity address information includes the identity address of the first node and the address type of the identity address. Correspondingly, the second node receives the first identity address information.

S906: The second node sends the second identity address information to the first node, where the second identity address information includes the identity address of the second node and the address type of the identity address.

Correspondingly, the first node receives the second identity address information.

For a specific implementation, refer to the detailed descriptions in the embodiment shown in FIG. 6. Details are not described herein again.

According to the foregoing solution, the resolving key index of the peer node stored by the local node is from the local node. This can better avoid a collision, on the local node, of the resolving key index of the peer node. In other words, on the local node, a case in which a same resolving key index corresponds to different peer nodes can be avoided. In this way, duration required for address trustworthiness verification of the peer node can be reduced, and communication efficiency and performance can be ensured.

Manner 3: Resolving key indexes of different nodes are from a same node. For example, both the first resolving key index and the second resolving key are from the first node. For example, the second information further includes the first resolving key index, and the second resolving key index is also from the first node. For example, the first node determines the second resolving key index in a manner of random number generation or fixed-algorithm allocation, and sends the second resolving key index to the second node. Correspondingly, in a subsequent data transmission process, the second node may perform data transmission with the first node by using the second resolving key index.

Optionally, in this solution, the first node may be a communication initiator, and may be referred to as a main node or an access point (access point, AP).

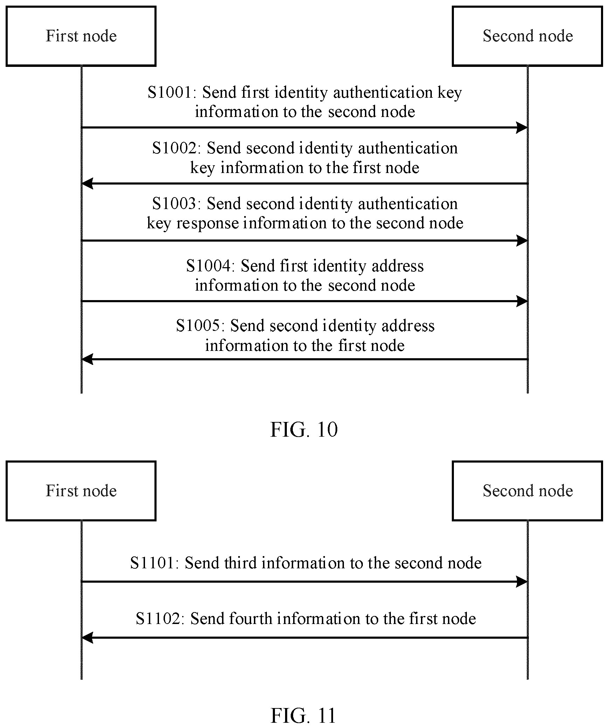

For example, before the method in the embodiment shown in FIG. 3, the communication method in embodiments of this application may further include one or more steps in steps S1001 to S1005 shown in FIG. 10. The one or more steps may be mandatory in some specific scenarios. It may be understood that a communication method shown in FIG. 10 may be still another possible implementation based on the communication method shown in FIG. 7. In this implementation, the second information in FIG. 7 includes but is not limited to first identity authentication key information, second identity authentication key response information, and first identity address information. The fifth information in FIG. 7 includes but is not limited to second identity authentication key information and second identity address information. Step S1001 to step S1005 are specifically as follows.

S1001: The first node sends the first identity authentication key information to the second node, where the first identity authentication key information includes the first resolving key and the first resolving key index.

Correspondingly, the second node receives the first identity authentication key information.

S1002: The second node sends the second identity authentication key information to the first node, where the second identity authentication key information includes the second resolving key.

Correspondingly, the first node receives the second identity authentication key information.

S1003: The first node sends the second identity authentication key response information to the second node, where the second identity authentication key response information includes the second resolving key index corresponding to the second resolving key.

Correspondingly, the second node receives the second identity authentication key response information.

S1004: The first node sends the first identity address information to the second node, where the first identity address information includes the identity address of the first node and the address type of the identity address.

Correspondingly, the second node receives the first identity address information.

S1005: The second node sends the second identity address information to the first node, where the second identity address information includes the identity address of the second node and the address type of the identity address.

Correspondingly, the first node receives the second identity address information.

For a specific implementation, refer to the detailed descriptions in the embodiment shown in FIG. 6. Details are not described herein again.

According to the foregoing solution, resolving key indexes of different nodes are from a same node. This facilitates management of the resolving key indexes, and can better avoid a collision, on the local node, of the resolving key index of the peer node. In this way, duration required for address trustworthiness verification of the peer node can be reduced, and communication efficiency and performance can be ensured.

In a possible implementation, the communication method in embodiments of this application may further include step S1101 or step S1101 and step S1102 in FIG. 11. The one or more steps may be mandatory in some specific scenarios. Step S1101 and step S1102 are specifically as follows.

S1101: The first node sends third information to the second node, where the third information indicates to determine the identity address of the first node based on a resolving key index and a to-be-resolved address.

Correspondingly, the second node receives the third information.

It should be noted that, alternatively, the third information indicates to send resolving key information and identity address information. In other words, that the third information indicates to determine the identity address of the first node based on the resolving key index and the to-be-resolved address may be understood as that the third information indicates to send the resolving key information and the identity address information. For clarity of description, an example in which the third information indicates to determine the identity address of the first node based on the resolving key index and the to-be-resolved address is used for description. The third information indicates to determine the identity address of the first node based on the resolving key index and the to-be-resolved address. In this case, during subsequent data transmission between the first node and the second node, the first node sends the first to-be-resolved address and the first identity address to the second node. Alternatively, during subsequent data transmission between the first node and the second node, the second node determines the resolving key by using the first resolving key index, and then resolves the received first to-be-resolved address based on the first resolving key. Alternatively, during subsequent data transmission between the first node and the second node, the second node communicates with the first node by using the first to-be-resolved address.

The resolving key information includes the resolving key and the resolving key index, or the resolving key information includes the resolving key. For example, the resolving key may be an IRK.

In addition, the third information may alternatively indicate not to send resolving key information and identity address information, or the third information may alternatively indicate not to determine the identity address of the first node based on the resolving key index and the to-be-resolved address. For example, when the third information indicates not to determine the identity address of the first node based on the resolving key index and the to-be-resolved address, or when the third information indicates not to send the resolving key information and the identity address information, in a subsequent data transmission process between the first node and the second node, the second node communicates with the first node without using the first to-be-resolved address, for example, directly communicates with the first node by using the identity address of the first node. Alternatively, the second node resolves the first to-be-resolved address by traversing locally stored resolving keys, and then determines the identity address of the first node.

S 1102: The second node sends fourth information to the first node, where the fourth information indicates whether to send the resolving key information and the identity address information, or the fourth information indicates whether to determine the identity address of the second node based on the resolving key index and the to-be-resolved address.

Correspondingly, the first node receives the fourth information.

For example, when the fourth information indicates to determine the identity address of the second node based on the resolving key index and the to-be-resolved address, or when the fourth information indicates to send the resolving key information and the identity address information, in the subsequent data transmission process between the first node and the second node, the first node can determine the identity address of the second node by using the second resolving key index and the second to-be-resolved address of the second node. For a specific implementation, refer to detailed descriptions in another embodiment of this application. Details are not described herein again. For another example, when the fourth information indicates not to determine the identity address of the second node based on the resolving key index and the to-be-resolved address, or the fourth information indicates not to send the resolving key information and the identity address information, in the subsequent data transmission process between the first node and the second node, the first node communicates with the second node without using the second to-be-resolved address, for example, communicates with the second node by using the identity address of the second node. Alternatively, the first node resolves the second to-be-resolved address by traversing the locally stored resolving key indexes, and then determines the identity address of the second node.

Optionally, the method in the embodiment shown in FIG. 11 may be a previous step of the method in the embodiment shown in FIG. 7.

In the foregoing manner, in the data transmission process between the first node and the second node, data transmission between the nodes can be implemented by using the to-be-resolved address. The to-be-resolved address can be resolved by only a node that has the same resolving key. Therefore, security of data transmission between the nodes is ensured. Further, flexibility of determining the identity address of the peer node by the local node can be further improved. For example, the third information sent by the first node to the second node is used as an example. If the first node obtains a small quantity of resolving keys of the peer node that are locally stored on the second node, for example, there is only one resolving key, the third information may indicate not to determine the identity address of the first node based on the resolving key index and the to-be-resolved address. In this way, in a process of resolving the identity address of the peer node by the second node, computation duration for determining the resolving key based on the resolving key index can be reduced. In addition, if the first node obtains a large quantity of resolving keys of the peer node that are locally stored on the second node, for example, there are at least two resolving keys, the third information may indicate to determine the identity address of the first node based on the resolving key index and the to-be-resolved address. In this way, computation duration required by the second node for resolving the identity address of the peer node is reduced, and data transmission efficiency between communication nodes is improved. Optionally, a quantity of resolving keys may be determined based on a configured threshold. If the quantity is less than the threshold (or less than or equal to the threshold), it may be considered that the quantity of resolving keys is small. Otherwise, it is considered that the quantity of resolving keys is large.

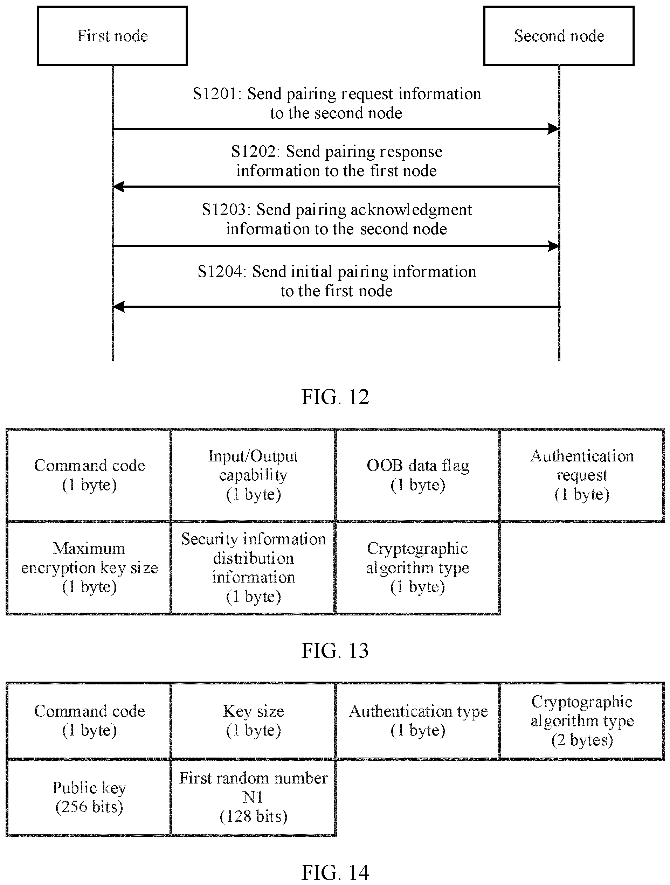

In a possible implementation, the third information may be included in pairing request information, and the fourth information may be included in pairing response information. In this implementation, signaling overheads can be reduced, and implementation is simple. For example, before the method in the embodiment shown in FIG. 7, the communication method in embodiments of this application may further include steps S1201 and S1202 shown in FIG. 12. It may be understood that a communication method shown in FIG. 12 may be an implementation of the communication method shown in FIG. 11. In this implementation, the third information in FIG. 11 includes but is not limited to security information distribution information included in pairing request information, and the fourth information in FIG. 11 includes but is not limited to security information distribution information included in pairing response information. Step S1201 and step S1202 are specifically as follows.

S1201: The first node sends the pairing request information to the second node, where the pairing request information includes the security information distribution information, and the security information distribution information indicates to send the resolving key information and the identity address information; or the security information distribution information indicates to determine the identity address of the first node based on the resolving key index and the to-be-resolved address; or the security information distribution information indicates that, after nodes are paired, a local node distributes a resolving key of the local node and an identity address of the local node to a peer node. For example, in this step, the security information distribution information indicates whether the first node distributes the resolving key of the first node and the identity address of the first node to the second node after the first node and the second node are paired. For example, for a definition of the security information distribution information, refer to Table 3. A meaning of another bit other than a 0^{th} bit and a 1^{st} bit is not limited in this embodiment of this application. It should be noted that the security information distribution information may alternatively indicate not to send the resolving key information and the identity address information; or the security information distribution information indicates not to determine the identity address of the first node based on the resolving key index and the to-be-resolved address; or the security information distribution information indicates that, after nodes are paired, a local node does not distribute a resolving key of the local node and an identity address of the local node to a peer node.

**Table 3: Definition of the security information distribution information**

| Security information distribution information | Meaning |
|---|---|
| 0^{th} bit | Indicates whether to distribute the resolving key information to the peer node after pairing |
| 1^{st} bit | Indicates whether to distribute the identity address of the local node to the peer node after pairing |
| Another bit | Reserved |

For example, when a value of the 0^{th} bit of the security information distribution information is 1, it indicates that, after the local node and the peer node are paired, the local node distributes the resolving key information to the peer node. When a value of the 0^{th} bit of the security information distribution information is 0, it indicates that, after the local node and the peer node are paired, the local node does not distribute the resolving key information to the peer node. It should be noted that a correspondence between the value of the 0^{th} bit of the security information distribution information and whether to send the resolving key information to the peer node may also be expressed in another form. This is not specifically limited.

For example, when a value of the 1^{st} bit of the security information distribution information is 1, it indicates that, after the local node and the peer node are paired, the local node distributes the identity address of the local node to the peer node. When a value of the 1^{st} bit of the security information distribution information is 0, it indicates that, after the local node and the peer node are paired, the local node does not distribute the identity address of the local node to the peer node. It should be noted that a correspondence between the value of the 1^{st} bit of the security information distribution information and whether to send the identity address of the local node to the peer node may also be expressed in another form. This is not specifically limited. In a possible implementation, when values of the 0^{th} bit and the 1^{st} bit of the security information distribution information each are 1, it may indicate that, after the local node and the peer node are paired, the local node needs to send the resolving key information and the identity address of the local node to the peer node. Alternatively, it may be understood that, in the subsequent data transmission process, the peer node can determine the identity address of the local node based on the resolving key index and the to-be-resolved address.

In another possible implementation, the peer node may ignore a value of the 1^{st} bit of the security information distribution information, and determine, based only on a value of the 0^{th} bit of the security information distribution information, whether the local node sends the resolving key to the peer node. For example, when the value of the 0^{th} bit in the security information distribution information sent by the local node is 1, the local node sends the resolving key information of the local node to the peer node regardless of whether the value of the 1^{st} bit in the security information distribution information is 0 or 1. For example, for a resolving key update scenario, the local node has sent the identity address of the local node to the peer node during previous data transmission. Therefore, only an updated resolving key needs to be sent to the peer node. In this case, the peer node can determine, based only on the value of the 0^{th} bit of the security information distribution information, whether the local node sends the resolving key to the peer node.

Further, optionally, the security information distribution information may further indicate a manner of obtaining the resolving key index, that is, may indicate one of the following three obtaining manners: The resolving key index of the peer node stored on the local node is from the peer node; the resolving key index of the peer node stored on the local node is from the local node; and resolving key indexes of different nodes are from a same node. For specific descriptions of the three manners of obtaining the resolving key index, refer to the related content in the foregoing embodiments of the application. Details are not described herein again. It should be noted that, in this embodiment of this application, in addition to the security information distribution information, the pairing request information may further include one or more of a command code (Code), an input/output capability IOC, and an out-of-band data flag (out-of-band data flag, OOB data flag), an authentication request (AuthReq), a maximum encryption key size (maximum encryption key size), and a cryptographic algorithm type. For example, FIG. 13 is a possible schematic diagram of pairing request information according to an embodiment of this application. A code indicates a message type. For example, 0x02 indicates a pairing request message, 0x03 indicates a pairing response message, 0x04 indicates pairing acknowledgment information, and 0x05 indicates initial pairing information. An IOC indicates an input/output capability of a node (for example, the first node) that sends the pairing request information. Table 4 is an implementation of a possible IOC field according to an embodiment of this application. An OOB data flag indicates whether a node that sends the OOB data flag supports an OOB pairing manner. An OOB medium may be any other wireless communication standard that can transmit corresponding information, for example, a near field communication (near field communication, NFC) standard or a quick response code. Herein, AuthReq may include one or more of a binding flag (bonding_flags, BF), a man-in-the-middle (man-in-the-middle, MITM) flag, a secure connection (secure connections, SC) flag, and a keypress (keypress) flag. A maximum encryption key size indicates a maximum size of a key that can be supported by a device that sends the maximum encryption key size. For example, a minimum size of a key may be limited to 7 bytes. The cryptographic algorithm type may further include one or more of an encryption algorithm, an integrity protection algorithm, a key generation algorithm, and a key agreement algorithm. The command code (Code), the input/output capability IOC, the out-of-band data flag OOB data flag, an authentication request (AuthReq), the maximum encryption key size (maximum encryption key size), and the cryptographic algorithm type may alternatively be expressed in other forms. This is not specifically limited.

**Table 4: Value of the IOC and corresponding description of the value**

| Value (Value) | Description (Description) |
|---|---|
| 0x00 | Display only (DisplayOnly) |
| 0x01 | Display yes or no (DisplayYesNo) |
| 0x02 | Keyboard only (KeyboardOnly) |
| 0x03 | No input and no output (NoInputNoOutput) |
| 0x04 | Keyboard display (KeyboardDisplay) |
| 0x05 | Having a PSK (pre-shared key) pairing capability |
| 0x06 to 0xFF | Reserved value (Reserved for future use) |

S1202: The second node sends the pairing response information to the first node, where the pairing response information includes the security information distribution information. For a specific implementation of the security information distribution information, refer to the related content in step S1201. Details are not described herein again.

Optionally, the pairing response information may further include one or more of a command code (Code), an input/output capability IOC, an out-of-band data flag OOB data flag, an authentication request (AuthReq), a maximum encryption key size (maximum encryption key size), and a cryptographic algorithm type. For specific descriptions of the foregoing information, refer to the related content in step S1201. Details are not described herein again.

In a possible implementation, the security information distribution information included in the pairing request information may further indicate a manner of obtaining the resolving key index, that is, may indicate one of the following three obtaining solutions: The resolving key index of the peer node stored on the local node is from the peer node; the resolving key index of the peer node stored on the local node is from the local node; and resolving key indexes of different nodes are from a same node. For specific descriptions of the three obtaining solutions, refer to the related content in the foregoing embodiments of the application. Details are not described herein again.

Optionally, the communication method shown in FIG. 12 further includes step S1203 and step S1204. Step S1203 and step S1204 are specifically as follows.

S1203: The first node sends the pairing acknowledgment information to the second node.

Correspondingly, the second node receives the pairing acknowledgment information.

The pairing acknowledgment information is that the local node (for example, the first node) selects a pairing manner and a cryptographic algorithm type with reference to an IOC of the peer node (for example, the second node) based on a cryptographic algorithm type that can be supported by the peer node, and notifies the peer node to perform subsequent pairing and encryption. For example, the pairing acknowledgment information may include a first random number N1 for subsequently generating a communication link key between nodes and a public key used for key agreement. For example, FIG. 14 is a possible schematic diagram of the pairing acknowledgment information according to an embodiment of this application. The pairing acknowledgment information includes one or more of a code, a key size, an authentication type, a cryptographic algorithm type, the public key, and the first random number N1. The key size may be, for example, a key size finally determined by a node that initiates the pairing acknowledgment information. For the authentication type, for example, refer to Table 5. Table 5 is an implementation of a possible authentication type field according to this embodiment of this application. For another parameter, refer to the related descriptions in steps S1201 and S1202. Details are not described herein again.

**Table 5: Value of the authentication type and corresponding description of the value**

| Value (Value) | Description (Description) |
|---|---|
| 0x00 | Password input authentication |
| 0x01 | Digital comparison authentication |
| 0x02 | Pass code input authentication |
| 0x03 | OOB (out-of-band) authentication |
| 0x04 | Input-free authentication |

S 1204: The second node sends the initial pairing information to the first node.

Correspondingly, the first node receives the initial pairing information.

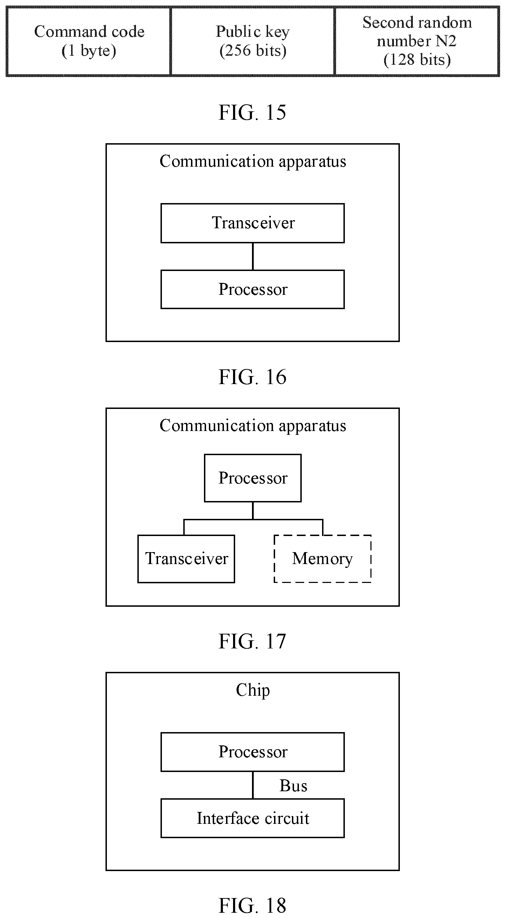

The initial pairing information includes a second random number N2 and a public key that are for subsequently generating the communication link key between the nodes. For example, FIG. 15 is a possible schematic diagram of the initial pairing information according to an embodiment of this application. The initial pairing information includes a code, the public key, and the second random number N2.

For example, in this embodiment of this application, whether the first node and the second node send respective resolving keys (which may also be understood as identity authentication keys) and identity address information to each other may be determined by using the pairing request information and the pairing response information that are included in the communication method in FIG. 12. Once it is determined that the first node and the second node need to send the respective resolving keys and identity address information to each other, after pairing between the first node and the second node is completed, a security information distribution protocol may be started. To be specific, the first node and the second node may exchange the respective resolving keys and identity addresses, and store a correspondence between the resolving key, the resolving key index corresponding to the resolving key, and the identity address in local resolving table. For a manner of obtaining the resolving key index, refer to the related content in another embodiment. Details are not described herein again. Then, in a data transmission process between the first node and the second node, refer to the communication method shown in FIG. 3. In this way, the computation duration for resolving the received to-be-resolved address is reduced, and communication efficiency and performance are ensured.

It should be noted that a sequence of the steps in the method embodiments of this application may be adjusted, combined, or deleted based on an actual requirement. The foregoing describes the method in embodiments of this application in detail. The following describes, in detail with reference to FIG. 16 to FIG. 18, apparatuses provided in embodiments of this application.

FIG. 16 is a schematic block diagram of a communication apparatus according to an embodiment of this application. As shown in FIG. 16, the communication apparatus may include a processor and a transceiver, to perform the method in any one of the foregoing possible implementations. The processor may be configured to perform internal processing of the apparatus, for example, determine an identity address of a first node based on a first resolving key index and a first to-be-resolved address, for another example, determine that local verification information obtained based on a first resolving key and a random number is the same as verification information included in the first to-be-resolved address, and determine that a first identity address is an identity address of the first node, and for still another example, determine the first to-be-resolved address of the first node. The transceiver is configured to perform functions related to sending and receiving, such as sending information to another apparatus or receiving information from another apparatus.

For example, the transceiver included in the communication apparatus may be a transmitter and a receiver, or may be a transmitter machine and a receiver machine.

In an implementation, the communication apparatus is a communication chip. The transceiver may be an input/output circuit or a port of the communication chip.

In this embodiment of this application, the communication apparatus may be an apparatus of the first node or a chip configured in the first node. The communication apparatus may be configured to perform the method that is in any possible implementation and that is performed by the first node. Alternatively, the communication apparatus may be an apparatus of a second node or a chip configured in a second node. The communication apparatus may be configured to perform the method that is in any possible implementation and that is performed by the second node.

In another implementation, the communication apparatus further includes modules configured to perform the method in any one of the foregoing possible implementations.

In still another implementation, the communication apparatus may further include a memory, as shown by a dotted-line box in FIG. 17. FIG. 17 is a schematic block diagram of a communication apparatus according to an embodiment of this application. The memory is coupled to the processor and the transceiver that are included in the communication apparatus. It may be understood that the memory, the processor, and the transceiver communicate with each other through an internal connection path. Specifically, the processor may be configured to execute instructions in the memory, to enable the apparatus to perform the method in any one of the foregoing possible implementations.

In addition, an embodiment of this application further provides a chip, as shown in FIG. 18. FIG. 18 is a schematic diagram of a structure of the chip. The chip includes one or more processors and an interface circuit, and is configured to perform the method in any one of the foregoing possible implementations. Optionally, the chip may further include a bus.

For example, the processor is an integrated circuit chip, and has a signal processing capability. For example, the processor may be a field programmable gate array (field programmable gate array, FPGA), may be a general-purpose processor, a digital signal processor (digital signal processor, DSP), an application-specific integrated circuit (application-specific integrated circuit, ASIC) or another programmable logic device, a discrete gate or a transistor logic device, or a discrete hardware component, may be a system on a chip (system on a chip, SoC), may be a central processing unit (central processing unit, CPU), may be a network processor (network processor, NP), may be a microcontroller unit (microcontroller unit, MCU), or may be a programmable logic device (programmable logic device, PLD) or another integrated chip. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and accomplished by a hardware decoding processor, or may be performed and accomplished by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

The interface circuit may be for sending or receiving data, instructions, or information. The processor may process the data, the instructions, or other information received through the interface circuit, and send, through the interface circuit, information obtained after processing.

Optionally, the chip further includes a memory, which may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that functions corresponding to each of the processor and the interface circuit may be implemented by using a hardware design, may be implemented by using a software design, or may be implemented by using a combination of software and hardware. This is not limited herein.

An embodiment of this application further provides a processing apparatus, including a processor and an interface. The processor is configured to perform the method that is in any possible implementation and that is performed by the first node, or is configured to perform the method that is any possible implementation and that is performed by the second node.

An embodiment of this application further provides a communication system. The communication system includes a communication apparatus configured to perform the method that is in any possible implementation and that is performed by the first node and a communication apparatus configured to perform the method that is in any possible implementation and that is performed by the second node.

It should be noted that the memory in the system and the method that are described in this specification includes but is not limited to these memories and any memory of another appropriate type.

An embodiment of this application further provides a computer program product. The computer program product includes computer program code. When the computer program code is run on a computer, the computer is enabled to perform the method that is in any possible implementation and that is performed by the first node, or perform the method that is in any possible implementation and that is performed by the second node.

This application further provides a computer-readable medium. The computer-readable medium stores program code. When the program code is run on a computer, the computer is enabled to perform the method that is in any possible implementation and that is performed by the first node, or perform the method that is in any possible implementation and that is performed by the second node.

All or some of the foregoing embodiments may be implemented by using software, hardware, firmware, or any combination thereof. When software is used to implement the foregoing embodiments, all or some of the embodiments may be implemented in a form of a computer program product. The computer program product includes one or more computer instructions. When the computer instruction is loaded and executed on a computer, the procedure or the functions according to embodiments of this application are all or partially generated. The computer may be a general-purpose computer, a dedicated computer, a computer network, or another programmable apparatus. The computer instruction may be stored in a computer-readable storage medium, or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

A person of ordinary skill in the art may be aware that units and algorithm steps in the examples described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units. To be specific, the parts may be located at one location, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first information from a first node, wherein the first information comprises a first to-be-resolved address and a first resolving key index that are of the first node, and the first resolving key index indicates a first resolving key; and
determining an identity address of the first node based on the first resolving key index and the first to-be-resolved address, wherein the identity address uniquely identifies the first node, wherein
the first to-be-resolved address comprises verification information for verifying the first resolving key, and the first resolving key corresponds to a first identity address.

2. The method according to claim 1, wherein the first to-be-resolved address comprises a random number, and the determining an identity address of the first node based on the first resolving key index and the first to-be-resolved address comprises:
determining that local verification information obtained based on the first resolving key and the random number is the same as the verification information comprised in the first to-be-resolved address; and
determining that the first identity address is the identity address of the first node.

3. The method according to claim 2, wherein the local verification information is obtained based on a hash operation performed on the first resolving key and the random number.

4. The method according to any one of claims 1 to 3, wherein a predefined or preconfigured correspondence exists between the first resolving key, the first resolving key index, and the first identity address.

5. The method according to claim 4, wherein before the receiving first information from a first node, the method further comprises:
receiving second information from the first node, wherein the second information comprises the first resolving key and the first identity address; and
defining or configuring the correspondence between the first resolving key, the first resolving key index, and the first identity address.

6. The method according to claim 5, wherein the second information further comprises the first resolving key index.

7. The method according to claim 5, wherein the method further comprises:
sending the first resolving key index to the first node.

8. The method according to any one of claims 1 to 7, wherein before the receiving first information from a first node, the method further comprises:
receiving third information from the first node, wherein the third information indicates to determine the identity address of the first node based on a resolving key index and a to-be-resolved address.

9. A communication method, wherein the method comprises:
determining a first to-be-resolved address of a first node; and
sending first information to a second node, wherein the first information comprises the first to-be-resolved address and a first resolving key index, and the first resolving key index indicates a first resolving key, wherein
the first to-be-resolved address comprises verification information for verifying the first resolving key, the first resolving key corresponds to an identity address of the first node, and the identity address uniquely identifies the first node.

10. The method according to claim 9, wherein the first to-be-resolved address comprises a random number, and the determining a first to-be-resolved address of a first node comprises:
determining the verification information obtained based on the first resolving key and the random number.

11. The method according to claim 10, wherein the verification information is obtained based on a hash operation performed on the first resolving key and the random number.

12. The method according to any one of claims 9 to 11, wherein before the sending first information to a second node, the method further comprises:
sending second information to the second node, wherein the second information comprises the first resolving key and the identity address.

13. The method according to claim 12, wherein the second information further comprises the first resolving key index.

14. The method according to claim 12, wherein the method further comprises:
receiving the first resolving key index from the second node.

15. The method according to any one of claims 9 to 14, wherein before the sending first information to a second node, the method further comprises:
sending third information to the second node, wherein the third information indicates to determine the identity address of the first node based on a resolving key index and a to-be-resolved address.

16. The method according to any one of claims 9 to 15, wherein a predefined or preconfigured correspondence exists between the first resolving key, the first resolving key index, and the identity address.

17. A communication apparatus, comprising:
a transceiver unit, configured to receive first information from a first node, wherein the first information comprises a first to-be-resolved address and a first resolving key index that are of the first node, and the first resolving key index indicates a first resolving key; and
a processing unit, configured to determine an identity address of the first node based on the first resolving key index and the first to-be-resolved address, wherein the identity address uniquely identifies the first node, wherein
the first to-be-resolved address comprises verification information for verifying the first resolving key, and the first resolving key corresponds to a first identity address.

18. The apparatus according to claim 17, wherein the first to-be-resolved address comprises a random number, and the processing unit is further configured to:
determine that local verification information obtained based on the first resolving key and the random number is the same as the verification information comprised in the first to-be-resolved address; and
determine that the first identity address is the identity address of the first node.

19. The apparatus according to claim 17 or 18, wherein a predefined or preconfigured correspondence exists between the first resolving key, the first resolving key index, and the first identity address.

20. The apparatus according to claim 19, wherein
the transceiver is further configured to receive second information from the first node, wherein the second information comprises the first resolving key and the first identity address; and
the processor is further configured to define or configure the correspondence between the first resolving key, the first resolving key index, and the first identity address.

21. A communication apparatus, comprising:
a processing unit, configured to determine a first to-be-resolved address of a first node; and
a transceiver unit, configured to send first information to a second node, wherein the first information comprises the first to-be-resolved address and a first resolving key index, and the first resolving key index indicates a first resolving key, wherein
the first to-be-resolved address comprises verification information for verifying the first resolving key, the first resolving key corresponds to an identity address of the first node, and the identity address uniquely identifies the first node.

22. The apparatus according to claim 21, wherein the first to-be-resolved address comprises a random number, and the processor is further configured to:
determine the verification information obtained based on the first resolving key and the random number.

23. The apparatus according to claim 21 or 22, wherein before sending the first information to the second node, the transceiver unit is further configured to:
send second information to the second node, wherein the second information comprises the first resolving key and the identity address.

24. The apparatus according to claim 23, wherein the transceiver is further configured to:
receive the first resolving key index from the second node.

25. A communication apparatus, wherein the communication apparatus comprises at least one processor and a transceiver, and the at least one processor is configured to invoke a computer program stored in at least one memory, to perform the method according to any one of claims 1 to 9 or any one of claims 10 to 18.

26. A communication device, comprising a communication apparatus configured to perform the method according to any one of claims 1 to 9 or any one of claims 10 to 18.

27. A chip, comprising one or more processors and an interface circuit, wherein the interface circuit is configured to provide an information input and/or output for the one or more processors, and the chip is configured to perform the method according to any one of claims 1 to 9 or any one of claims 10 to 18.

28. A communication system, comprising a communication apparatus configured to perform the method according to any one of claims 1 to 9, and a communication apparatus configured to perform the method according to any one of claims 10 to 18.

29. A computer-readable storage medium, wherein the computer-readable storage medium stores a computer program or instructions, and when the computer program or the instructions are executed by a communication apparatus, the method according to any one of claims 1 to 9 or any one of claims 10 to 18 is implemented.

30. A computer program product, wherein when the computer program product runs on one or more processors, the method according to any one of claims 1 to 9 or any one of claims 10 to 18 is implemented.
